## Europäisches Patentamt
## European Patent Office
## Office européen des brevets

(19)

(11) Veröffentlichungsnummer: **0 136 495**
**A1**

(12) **EUROPÄISCHE PATENTANMELDUNG**

(21) Anmeldenummer: **84109680.3**

(22) Anmeldetag: **14.08.84**

(51) Int. Cl.⁴: **G 01 B 7/12**
**G 01 B 3/20**

(30) Priorität: **23.08.83 DE 3330396**

(43) Veröffentlichungstag der Anmeldung:
**10.04.85 Patentblatt 85/15**

(84) Benannte Vertragsstaaten:
**AT BE CH DE FR GB IT LI LU NL SE**

(71) Anmelder: **ELEKTRONIKBAU ULRICH HELLAK**
**Siebenlindenstrasse 62**
**D-7407 Rottenburg(DE)**

(72) Erfinder: **Hellak, Ulrich**
**Sandäckerstrasse 2**
**D-7407 Rottenburg 1(DE)**

(72) Erfinder: **Posselt, Günther**
**Amselweg 58**
**D-7400 Tübingen(DE)**

(74) Vertreter: **Lieck, Hans-Peter, Dipl.-Ing. et al,**
**Lieck & Betten Patentanwälte Maximiliansplatz 10**
**D-8000 München 2(DE)**

(54) **Messvorrichtung zur Bestimmung des Durchmessers von Rundhölzern od. dgl.**

(57) Eine Meßvorrichtung zur Bestimmung des Durchmessers von Rundhölzern, Baumstämmen od. dgl. weist ein Führungsrohr (1), an dessen einem Ende ein stationärer Meßschenkel (2) senkrecht zum Führungsrohr (1) angebracht ist, und einen auf dem Führungsrohr (1) verschieblich angeordneten Schieber (4) auf, an dessen einem Ende ein gegenüber dem stationären Meßschenkel (2) beweglicher Meßschenkel (3) senkrecht zum Schieber (4) angebracht ist. Dabei ist in dem Führungsrohr (1) ein Linearpotentiometer (9, 10, 11, 12) angeordnet, das mit einer Einrichtung zur Anzeige des festgestellten Durchmessers verbunden ist. Der Schleifer (11) des Linearpotentiometers kann durch Magnetkopplung mit dem Schieber zusammen mit diesem verschoben werden.

EP 0 136 495 A1

./...

Fig 3

— 1 —

Beschreibung

Meßvorrichtung zur Bestimmung des Durchmessers von
Rundhölzern od. dgl.

Die Erfindung betrifft eine Meßvorrichtung zur Bestimmung des Durchmessers von Rundhölzern, Baumstämmen
od. dgl., mit einer Schiene, an deren einem Ende ein
stationärer Meßschenkel senkrecht zur Schiene angebracht ist, und einem auf der Schiene verschieblich
angeordneten Schieber, an dessen einem Ende ein gegenüber dem stationären Meßschenkel beweglicher Meßschenkel senkrecht zum Schieber angebracht ist.

Derartige Meßvorrichtungen sind beispielsweise als
Schieblehren bekannt.

Die Aufgabe der Erfindung besteht darin, die bekannte
Meßvorrichtung so zu verbessern, daß mit ihr eine
leichte und genaue Bestimmung des Durchmessers von
Rundhölzern, Baumstämmen od. dgl. möglich ist.

Diese Aufgabe wird dadurch gelöst, daß die Schiene als Führungsrohr ausgebildet ist, in dem Führungsrohr ein Linearpotentiometer angeordnet ist, das mit einer Einrichtung zur Anzeige des festgestellten Durchmessers verbunden ist, der Schleifer des Linearpotentiometers mit einem Schleiferschlitten verbunden ist, der ein oder mehrere erste Magneten aufweist, der Schieber ein oder mehrere zweite Magneten aufweist und die ersten und zweiten Magneten derart durch Magnetkopplung in Eingriff bringbar sind, daß bei einer Verschiebung des Schiebers gleichzeitig der Schleifer des Linearpotentiometers verschoben wird.

Durch die Verwendung des Linearpotentiometers zur Messung des Durchmessers von Rundhölzern, Baumstämmen od. dgl. wird eine genaue Bestimmung des Durchmessers mit gleichzeitiger elektronischer Anzeige, etwa in Digitalform, ermöglicht. Dabei kann durch die Magnetkopplung zwischen Schieber und Schleiferschlitten der Schieber besonders leicht auf dem Führungsrohr verschoben werden.

Bei einer bevorzugten Ausführungsform der Erfindung ist zwischen Schieber und Führungsrohr eine Gleitführung angeordnet, in der der oder die zweiten Magneten angeordnet sind und die relativ zum Schieber einstellbar ist.

Dies ermöglicht ein vorheriges Einstelllen eines bestimmten Rindenabzugs, d. h. einer Entfernung, die der Rindendicke des zu messenden Baumstamms entspricht.

Dadurch, daß bei einer weiteren Ausführungsform der Erfindung im Schieber mehrere Einkerbungen vorgesehen sind, in die eine mit der Gleitführung verbundene Rastfeder eingreifen kann, wodurch die Gleitführung - je nach dem vorgesehenen Rindenabzug - relativ zum Schieber fixierbar ist, kann die Einstellung des Gleitschiebers relativ zum Schieber besonders einfach vorgenommen werden. Dabei können selbstverständlich die Einkerbungen für die verschiedenen Raststellen in der Gleitführung vorgesehen sein und das andere Ende der Rastfeder im Schieber fest eingreifen.

Weitere vorteilhafte Ausführungsformen der Erfindung sind in den Ansprüchen 5 bis 7 beschrieben, wobei durch die Füllung des Führungsrohres mit Stickstoff eine konstante Meßatmosphäre geschaffen wird, so daß die Meßanzeige unabhängig von den äußeren Witterungsbedingungen konstant ist.

Eine Ausführungsform der Erfindung wird anhand der Zeichnungen näher beschrieben. Es zeigen:

Fig. 1    eine Seitenansicht der erfindungsgemäßen Meßvorrichtung,

Fig. 2    in vergrößerter Darstellung eine Draufsicht auf die Digitalanzeige der Meßvorrichtung,

Fig. 3    eine Schnittansicht des wesentlichen Teils der erfindungsgemäßen Meßvorrichtung, wobei der Deutlichkeit halber einige Teile in weggebrochener Darstellung wiedergegeben sind, und

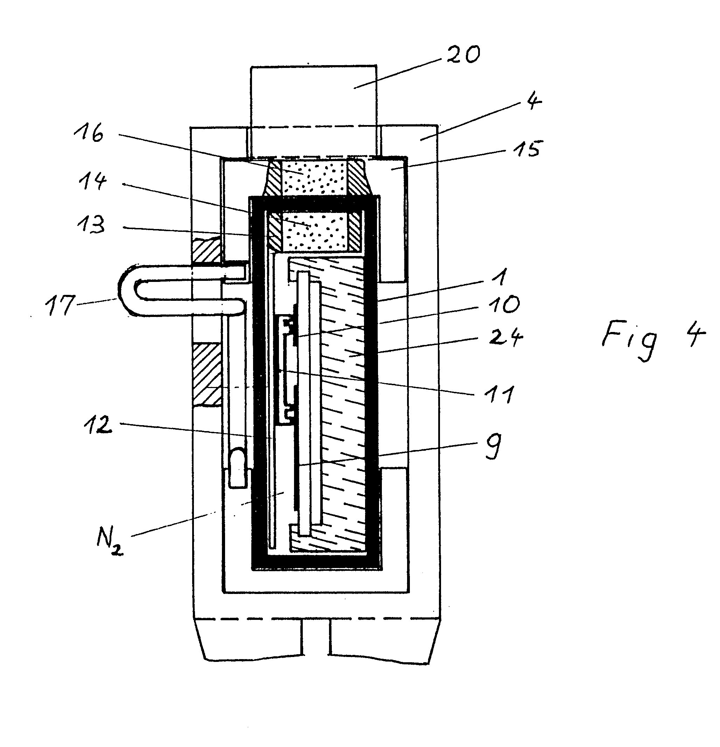

Fig. 4    Schnittansicht entlang der Linie A - A nach Fig. 3.

Die erfindungsgemäße Meßvorrichtung zur Bestimmung des Durchmessers von Rundhölzern, Baumstämmen oder dgl. weist eine als Führungsrohr ausgebildete Schiene 1 auf, an deren einem Ende ein stationärer Meßschenkel 2 senkrecht zur Schiene 1 angebracht ist. Diesem gegenüber ist ein beweglicher Meßschenkel 3 angeordnet, zwischen deren einander gegenüberliegenden Seiten der Durchmesser eines Rundholzes, Baumstammes od. dgl. wie bei üblichen Schieblehren gemessen werden kann.

Der bewegliche Meßschenkel 3 ist an einem auf dem aus einem unmagnetischen Material (z.B. CuZn 37) bestehenden Führungsrohr 1 verschieblich angeordneten Schieber 4 befestigt, der aus Aluminium oder auch ein Spritzgußteil sein kann. Außerdem ist eine Abstützung bzw. Verstrebung 5 zwischen dem Meßschenkel 3 und dem anderen Ende des Schiebers 4 vorgesehen, durch die die Stabilität des beweglichen Teils der Meßvorrichtung erhöht und zudem ein Durchgriff für die Hand geschaffen wird.

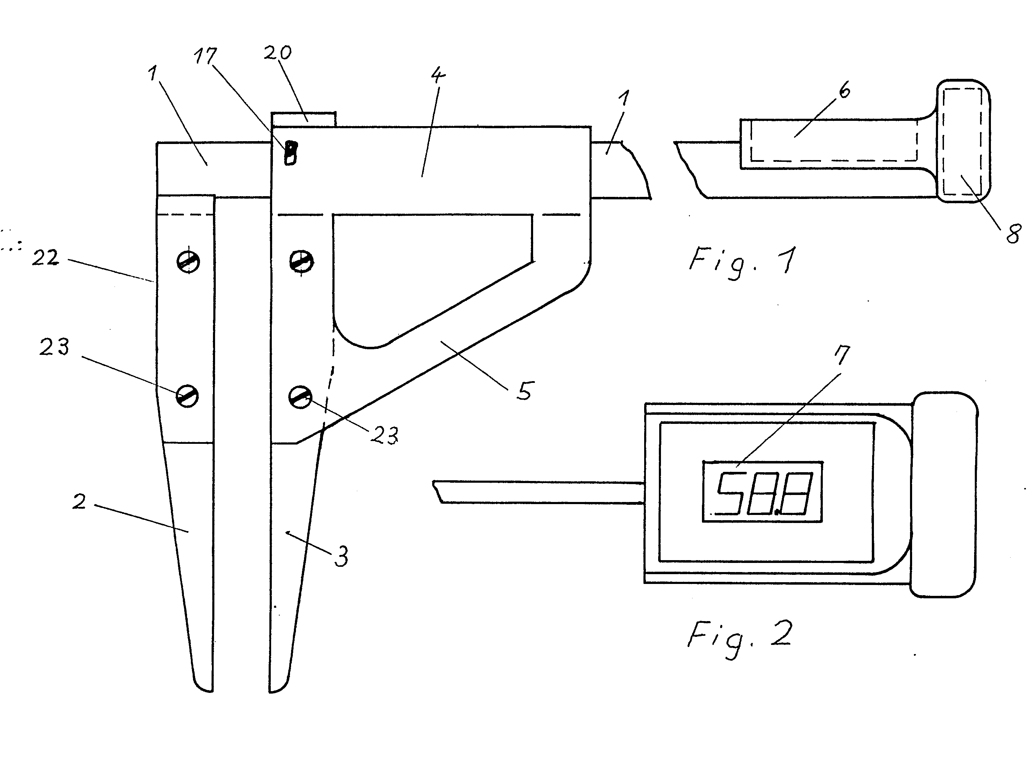

Das Führungsrohr 1 weist an seinem anderen Ende einen Einbauraum 6 für die Elektronik sowie eine Digitalanzeige 7 auf, die in vergrößerter Darstellung in Fig. 2 gezeigt ist, und wird durch einen Einbauraum 8 für eine Batterie abgeschlossen.

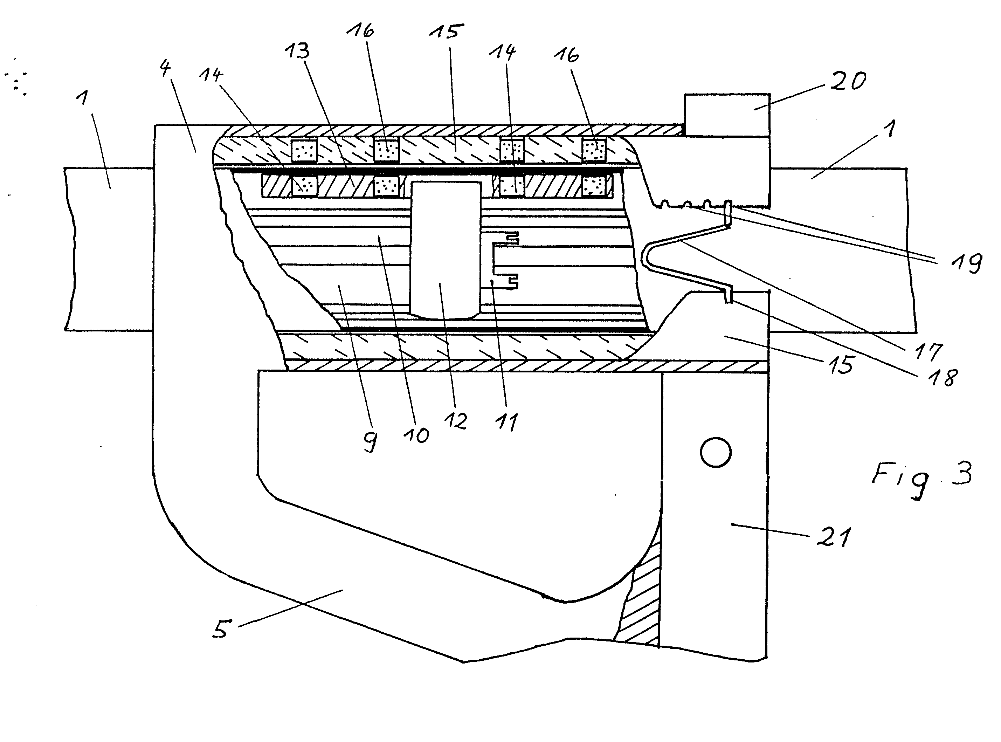

Wie am besten aus den Fig. 2 und 3 zu ersehen ist, ist im Innern des Führungsrohrs 1 ein Linearpotentiometer vorgesehen, d. h. ein Potentiometer zur Längenmessung, das dem Fachmann bekannt ist und daher nicht näher beschrieben werden muß. In bekannter Weise weist das Linearpotentiometer eine Widerstandsbahn 9 und eine Schleiferkopplungsbahn 10 auf, die über einen Schleifer 11 miteinander gekoppelt sind. Der Schleifer 11 sitzt auf einem Schleiferträger 12, der mit einem Schleiferschlitten 13 verbunden ist. Der Schleiferschlitten 13 weist mehrere erste Magneten 14 auf und liegt mit seiner Oberseite an der Innenseite des Führungsrohrs 1 an.

Zwischen dem beweglichen Schieber 4 und dem Führungsrohr 1 ist eine Gleitführung 15 angeordnet, die gegenüber den ersten Magneten 14 zweite Magneten 16 aufweist. Die Gleitführung 15 ist relativ zum Schieber 4 beweglich ausgebildet. Dadurch wird ermöglicht, daß ein Abzug für die Dicke der Rinde, d. h. der sogenannte Rindenabzug, vor dem Messen des Durchmessers des Baumstamms eingestellt werden kann.

Hierzu ist eine Rastfeder 17 vorgesehen, die einerseits bei 18 in eine Einkerbung in der Gleitführung 15 eingreift und andererseits mit einer von mehreren, am beweglichen Schieber 4 vorgesehenen Einkerbungen 19 in Eingriff bringbar ist. Mittels eines Verstellknopfes 20 kann die Gleitführung 15 je nach dem vorgesehenen Rindenabzug relativ zum Schieber 4 arretiert werden.

Der bewegliche Schieber 4 weist an seinem Meßende eine Aufnahme 21 für den beweglichen Meßschenkel 3 auf, der mit dem hinteren Ende des Schiebers über die oben erwähnte Verstrebung 5 verbunden ist. In gleicher Weise weist auch das Führungsrohr 1 an seinem Meßende eine Aufnahme für den stationären Meßschenkel 2 auf, wobei die Meßschenkel z. B. mittels Schrauben 23 in den Aufnahmen 21 und 22 befestigbar sind, wie es am besten aus Fig. 1 zu ersehen ist.

Gemäß Fig. 3 werden Widerstandsbahn 9 und Schleiferkopplungsbahn 10 von einer Trägereinrichtung 24 gehalten, die an der Seitenwand des Führungsrohrs 1 angebracht ist.

Der Innenraum des Führungsrohrs 1 ist vorzugsweise mit Stickstoff ($N_2$) gefüllt, wodurch eine konstante Meßatmosphäre - unabhängig von den Umweltbedingungen und der Feuchtigkeit - geschaffen wird.

Bei der Messung des Durchmessers von Rundhölzern, Baumstämmen od. dgl. kann die erfindungsgemäße Meßvorrichtung durch die Ausbildung des durch die Abstützung 5 gebildeten Durchgriffs mit der einen Hand der Bedienungsperson und mit der anderen Hand an dem als Handgriff geformten Endteil des Führungsrohrs gehalten werden. Mittels des Verstellknopfes 20 wird vorab der Rindenabzug eingestellt, so daß bei einer Messung eines Baumstamms mit Rinde an der Digitalmeßanzeige 7 sofort der Durchmesser des Baumstamms ohne Rinde angegeben werden kann.

Änderungen und Ausgestaltungen der beschriebenen Ausführungsform sind für den Fachmann ohne weiteres möglich und fallen in den Rahmen der Erfindung.

- 1 -

P a t e n t a n s p r ü c h e

1.

Meßvorrichtung zur Bestimmung des Durchmessers von Rundhölzern, Baumstämmen od. dgl., mit einer Schiene, an deren einem Ende ein stationärer Meßschenkel senkrecht zur Schiene angebracht ist, und einem auf der Schiene verschieblich angeordneten Schieber, an dessen einem Ende ein gegenüber dem stationären Meßschenkel beweglicher Meßschenkel senkrecht zum Schieber angebracht ist,
dadurch gekennzeichnet, daß
die Schiene als Führungsrohr (1) ausgebildet ist,
in dem Führungsrohr (1) ein Linearpotentiometer (9, 10, 11, 12) angeordnet ist, das mit einer Einrichtung zur Anzeige des festgestellten Durchmessers verbunden ist,
der Schleifer (11) des Linearpotentiometers mit einem Schleiferschlitten (13) verbunden ist, der ein oder mehrere erste Magneten (14) aufweist,
der Schieber (4) ein oder mehrere zweite Magneten (16) aufweist und
die ersten und zweiten Magneten (14, 16) derart durch Magnetkopplung im Eingriff bringbar sind, daß bei einer Verschiebung des Schiebers (4) gleichzeitig der Schleifer (11) des Linearpotentiometers verschoben wird.

2.

Meßvorrichtung nach Anspruch 1,

dadurch gekennzeichnet,

daß zwischen Schieber (4) und Führungsrohr (1) eine Gleitführung (15) angeordnet ist, in der der oder die zweiten Magneten (16) angeordnet sind und die relativ zum Schieber (4) einstellbar ist.

3.

Meßvorrichtung nach Anspruch 2,

dadurch gekennzeichnet,

daß im Schieber (4) mehrere Einkerbungen (19) vorgesehen sind, in die eine mit der Gleitführung (15) verbundene Rastfeder (17) eingreifen kann, wodurch die Gleitführung (15) - je nach dem vorgesehenen Rindenabzug - relativ zum Schieber (4) fixierbar ist.

4.

Meßvorrichtung nach Anspruch 2,

dadurch gekennzeichnet,

daß in der Gleitführung (15) mehrere Einkerbungen vorgesehen sind, in die die mit dem Schieber (4) verbundene Rastfeder (17) eingreifen kann, wodurch die Gleitführung (15) - je nach dem vorgesehenen Rindenabzug - relativ zum Schieber (4) fixierbar ist.

5.

Meßvorrichtung nach einem der Ansprüche 1 bis 4,

dadurch gekennzeichnet,

daß ein Verstellknopf (20) vorgesehen ist, mittels dem die Gleitführung (15) über die Rastfeder (17) bezüglich des beweglichen Schiebers (4) arretierbar ist.

6.

Meßvorrichtung nach einem der Ansprüche 1 bis 5,
dadurch gekennzeichnet,
daß das Führungsrohr (1) mit Stickstoff ($N_2$) gefüllt
ist.

7.

Meßvorrichtung nach einem der Ansprüche 1 bis 6,
dadurch gekennzeichnet,
daß zwischen dem hinteren Ende des beweglichen Schiebers (4) und dem beweglichen Meßschenkel (3) bzw. dessen Aufnahme (21) eine Verstrebung (5) vorgesehen ist
und das hintere Ende des Führungsrohrs (1) als Handgriff geformt ist.

Fig. 1

Fig. 2

1/3

0136495

Fig. 3

0136495

Fig 4

3/3

0136495

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | DE-A-2 941 205 (J.M. MEISSNER et al.) <br> * Ansprüche 1,9,10 * | 1 | G 01 B 7/12 <br> G 01 B 3/20 |
| | --- | | |
| A | DE-A-2 624 519 (G. TRAUTMANN) <br> * Anspruch 1 * | 1 | |
| | --- | | |
| A | US-A-4 226 024 (G. WESTERBERG et al.) <br> * Anspruch 1 * | 1 | |
| | --- | | |
| A | US-A-3 851 396 (S.E. KLABUNDE) <br> * Figur 1; Spalte 4; Absatz 1 * | 1 | |
| | ----- | | |

| | RECHERCHIERTE SACHGEBIETE (Int. Cl.4) |
|---|---|
| | G 01 B 3/20 <br> G 01 B 7/00 |

Der vorliegende Recherchenbericht wurde für alle Patentansprüche erstellt.

| Recherchenort | Abschlußdatum der Recherche | Prüfer |
|---|---|---|
| BERLIN | 22-11-1984 | KOEHN G |